## Europäisches Patentamt

## European Patent Office

## Office européen des brevets

(11) Veröffentlichungsnummer: **0 264 826 B1**

(12) **EUROPÄISCHE PATENTSCHRIFT**

(45) Veröffentlichungstag der Patentschrift: **22.12.93**

(21) Anmeldenummer: **87115083.5**

(22) Anmeldetag: **15.10.87**

(51) Int. Cl.⁵: **C08G 65/28**, C11D 3/37,
C08G 65/32, B01D 19/04

(54) Fettsäureester von Polyglycerinpolyglykolethern, ihre Herstellung und ihre Verwendung.

(30) Priorität: **23.10.86 DE 3636086**

(43) Veröffentlichungstag der Anmeldung:
**27.04.88 Patentblatt 88/17**

(45) Bekanntmachung des Hinweises auf die
Patenterteilung:
**22.12.93 Patentblatt 93/51**

(84) Benannte Vertragsstaaten:
**DE ES FR GB IT NL SE**

(56) Entgegenhaltungen:
**EP-A- 0 000 137**
**EP-A- 0 126 967**
**EP-A- 0 146 854**
**EP-A- 0 217 116**
**US-A- 3 337 595**

**FETT WISSENSCHAFT TECHNOLOGIE, Band
89, März 1987, Seiten 106-111, Leinfelden-
Echterdingen; R. Piorr et al.: "Schaumarme,
biologisch abbaubare nichtionische Tenside"**

(73) Patentinhaber: **Henkel Kommanditgesellschaft
auf Aktien**

**D-40191 Düsseldorf(DE)**

(72) Erfinder: **Herrmann, Klaus
Köpendicker Strasse 33
D-4019 Monheim(DE)**
Erfinder: **Wittich, Leonhard
Wilhelm-Leuschner-Strasse 24
D-4018 Langenfeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft mit Fettsäuren veresterte Anlagerungsprodukte von Ethylenoxid und Propylenoxid an technische Polyglycerine, ein Verfahren zu ihrer Herstellung und ihre Verwendung als Entschäumer.

Glycerin- und Polyglcerinpolypropylenglykolether stellen bekannte Substanzen dar; sie werden gemäß der DE-B-12 61 618, der DE-B-12 80 455 der DE-A-23 60 020 und der US-A-3 078 236 als Entschäumer in Wasch- und Reinigungslösungen eingesetzt.

Bei Arbeiten zur Entwicklung von Entschäumern mit verbesserten anwendungstechnischen Eigenschaften wurden Fettsäureester von Polyglycerinpolyethylenglykol-/-polypropylenglykolethern aufgefunden, die sich durch eine überlegene schauminhibierende Wirkung auszeichnen.

Gegenstand der Erfindung sind Fettsäureester von Polyglycerinethern, die dadurch erhältlich sich, daß man Polyglycerine in an sich bekannter Weise mit Ethylenoxid und Propylenoxid umsetzt und das erhaltene Alkylenoxidanlagerungsprodukt mit Fettsäuren verestert, wobei man 2 bis 15 Mol Ethylenoxid, 10 bis 60 Mol Propylepoxid und 1 bis 3 Mol Fettsäure pro Mol im Polyglycerin vorhandener Hydroxylgruppen einsetzt.

Gegenstand der Erfindung ist weiterhin ein Verfahren zur Herstellung von Fettsäureestern von Polyglycerinpolyglykolethern, bei dem man Polyglycerine in an sich bekannter Weise in Gegenwart eines sauren oder alkalischen Alkoxilierungskatalysators mit Ethylenoxid und Propylenoxid umsetzt und das erhaltene Alkylenoxidanlagerungsprodukt,gegebenenfalls in Gegenwart eines Veresterungskatalysators, mit Fettsäuren verestert, wobei man 2 bis 15 Mol Ethylenoxid, 10 bis 60 Mol Propylenoxid und 1 bis 3 Mol Fettsäure pro Mol im Polyglycerin vorhandener Hydroxylgruppen umsetzt.

Gegenstand der Erfindung ist schließlich die Verwendung der vorstehend beschriebenen Fettsäureester von Polyglycerinen als Entschäumer in wässrigen Zusammensetzungen.

Als Ausgangsmaterial für die Herstellung der erfindungsgemäßen Fettsäureester kommen die in jüngster Zeit verfügbar gewordenen Glycerinoligomeren Diglycerin, Triglycerin sowie lineares oder verzweigtes Tetraglycerin in Betracht. In der Regel werden die erfindungsgemäßen Fettsäureester jedoch aus technischen Polyglycerinen hergestellt, bei denen es sich um Gemische aus einer Reihe von Glycerinoligomeren trandelt. Solche technischen Polyglycerine können nach bekannten Verfahren durch Kondensation von Glycerin bei erhöhter Temperatur und vermindertem Druck in Gegenwart alkalischer Katalysatoren unter Luftausschluß und anschließende Entfernung des Katalysators mit Hilfe von Ionenaustauschern erhalten werden. Dabei kann der durchschnittliche Polymerisationsgrad über die Reaktionsbedingungen, insbesondere über die Dauer des Erhitzens gesteuert werden. Die auf diese Weise hergestellten Produkte enthalten neben einem gewissen Anteil an nichtkondensiertem Glycerin praktisch alle Oligomeren bis zu dem jeweils erzielten maximalen Polymerisationsgrad, der Werte bis zu 30 annehmen kann. Bevorzugt werden die erfindungsgemäßen Fettsäureester aus technischen Polyglycerinen hergestellt, die die Glycerinoligomeren vom Diglycerin bis zum Heptaglycerin und daneben bis zu 20 Gewichtsprozent monomeres Glycerin enthalten. Derartige technische Polyglycerine fallen im übrigen auch bei der industriellen Gewinnung von Glycerin als Destillationsrückstände an. Vorzugsweise werden technischen Polyglycerine mit Hydroxylzahlen im Bereich von 900 bis 1100 eingesetzt.

Zur Herstellung der erfindungsgemäßen Fettsäureester wird das als Ausgangsmaterial gewählte Polyglycerin zunächst mit Ethylenoxid und Propylenoxid umgesetzt. Anschließend wird das Alkoxylierungsprodukt mit Fettsäure verestert.

Die Alkoxylierung kann in der Weise vorgenommen werden, daß man das Polyglycerin in einer Random-Polymerisation gleichzeitig mit den vorgesehen Mengen Ethylenoxid und Propylenoxid umsetzt. Weiterhin kann das Polyglcerin zuerst mit dem einen, dann mit dem anderen Alkylenoxid umgesetzt werden, wobei sowohl die Reihenfolge Ethylenoxid-Propylenoxid als auch die Reihenfolge Propylenoxid-Ethylenoxid eingehalten werden kann. Die Alkoxylierung kann auch als Blockpolymerisation mit Teilmengen des Ethylenoxids und/oder des Propylenoxids, beispielsweise in der Reihenfolge Propylenoxid-Ethylenoxid-Propylenoxid, ausgeführt werden. In einer bevorzugten Ausführungsform der Erfindung setzt man das Polyglycerin zuerst mit Ethylenoxid und anschließend mit Propylenoxid um. In einer weiteren bevorzugten Ausführungsform setzt man das Polyglycerin gleichzeitig mit Ethylenoxid und Propylenoxid um.

Die Alkoxylierung erfolgt nach an sich bekannten Verfahren und wird vorzugsweise unter Druck und bei erhöhter Temperatur, beispielsweise bei 80 bis 200 °C, in Gegenwart von sauren oder alkalischen Katalysatoren durchgeführt. Vorzugsweise erfolgt die Anlagerung von Ethylenoxid bei 165 bis 185 °C. Die Anlagerung von Propylenoxid wird bevorzugt bei 115 bis 135 °C vorgenommen. In den Fällen, in den Ethylenoxid und Propylenoxid gleichzeitig mit dem Polyglycerin umgesetzt werden, läßt man die Reaktionspartner vorzugsweise bei 115 bis 135 °C miteinander reagieren. Als saure Katalysatoren kommen z.B. Lewis-Säuren wie Bortrifluorid und Aluminiumchlorid in Betracht. Bevorzugt sind jedoch alkalische Katalysatoren wie Alkoholate, Hydroxide, Oxide, Carbonate, Hydride oder Amide der Alkali- und Erdalkalimetalle. Besonders bevorzugt sind Alkoholate des Natriums, beispielsweise Natriummethylat und Natriumethylat sowie Natrium- und Kaliumhydroxid. Die Katalysatoren werden dabei in Mengen von 0,05 bis 3 Gewichtsprozent, vorzugsweise in Mengen von 0,1 bis 1 Gewichtsprozent, jeweils bezogen auf die Gesamtmenge aus Polyglycerin und Alkylenoxiden, eingesetzt. Nach beendeter Umsetzung wird der Katalysator durch Neutralisation mit Mineralsäure oder einer geeigneten organischen Säure, beispielsweise Milchsäure, inaktiviert, oder durch Ausrühren mit sauren Tonen und anschließende Filtration aus dem Reaktionsprodukt entfernt.

In einer bevorzugten Ausführungsform der Erfindung setzt man das Polyglycerin nacheinander oder gleichzeitig mit 5 bis 10 Mol Ethylenoxid und 15 bis 35 Mol Propylenoxid pro Mol im Polyglycerin vorhandener Hydroxylgruppen um.

In einer weiteren bevorzugten Ausführungsform der Erfindung liegt bei der Umsetzung des Polyglycerins mit den Alkylenoxiden das Molverhältnis von Ethylenoxid zu Propylenoxid im Bereich von 1 : 2 bis 1 : 3,5.

Zur Veresterung der vorstehend beschriebenen Anlagerungsprodukte des Ethylenoxids und Propylenoxids an Polyglycerine eignen sich insbesondere geradkettige und/oder verzweigte gesättigte und/oder ungesättigte Fettsäuren, die 8 bis 22 Kohlenstoffatomen aufweisen. Soweit hier ungesättigte Fettsäuren in Betracht kommen, können diese eine bis vier Kohlenstoff-Kohlenstoff-Doppelbindungen enthalten. Beispiele für geeignete Fettsäuren sind Capryl-, Caprin-, Laurin-, Myristin-, Palmitin-, Stearin-, Arachidin-, Behen-, Palmitöl-, Öl- Eruca-, Linol-, Linolen-, Arachidon-, Ethylhexan-, Isopalmitin- und Isostearinsäure. Die zu veresternden Polyglycerinpolyglykolether können sowohl mit einzelnen Fettsäuren als auch mit Fettsäuregemischen umgesetzt werden, wobei im zuletzt genannten Fall vor allem solche Fettsäuregemische in Betracht kommen, die bei der großtechnischen Spaltung von natürlich vorkommenden Fetten und Ölen anfallen. Bevorzugt werden hier bestimmte Fettsäurefraktionen, beispielsweise die sogenannten Vorlauffettsäuren, die vor allem bei der destillativen Auftrennung der Fettsäuren des Kokosöls oder Palmkernöls erhalten werden und überwiegend aus gesättigten Fettsäuren mit 8 bis 10 Kohlenstoffatomen bestehen. Von ganz besonderem Interesse sind als Veresterungskomponente technische Ölsäuren, wie sie aus den Fettsäuregemischen natürlicher Fette und Öle, beispielsweise denen des Rindertalgs und des Palmöls, über die Fettsäuretrennung nach dem Umsetzverfahren zugänglich sich. Diese technischen Ölsäuren bestehen überwiegend aus Fettsäuren, die 16 bis 18 Kohlenstoffatome aufweisen, von denen wiederum ein hoher Anteil einfach oder mehrfach ungesättigt ist. Vorlauffettsäuren einerseits und technische Ölsäuren andererseits haben insofern besondere Bedeutung, als ihre Ester mit Polyglycerinpolyalkylenglykolethern in der Regel bei Raumtemperatur flüssige Substanzen darstellen.

Bei der Veresterung der Polyglycerinpolyethylenglykol/-polypropylenglykolether setzt man die Fettsäuren im Molverhältnis 1 : 1 bis 1 : 3 bezogen auf jeweils 1 Mol im Ausgangspolyglycerin vorhandener Hydroxylgruppen ein. Vorzugsweise setzt man bei der Veresterung die Fettsäure im stöchiometrischen Überschuß gegenüber den im Ausgangsmaterial und auch im Überschuß gegenüber den tatsächlich im Polyglycerinpolyglykolether vorhandenen Hydroxylgruppen ein. In einer bevorzugten Ausführungsform der Erfindung setzt man das zu veresternde Alkylenoxidanlagerungsprodukt des Polyglycerins mit 1,1 bis 2 Mol Fettsäure pro Mol im Polyglycerin vorhandener Hydroxylgruppen um.

Die Veresterung der Polyglycerinpolyglykolether wird nach sich bekannten Verfahren der organischen Synthese vorgenommen. Zweckmäßigerweise läßt man dabei die Reaktionspartner bei 180 bis 250 ° C, bevorzugt in einer Inertgasatmosphäre, aufeinander einwirken und destilliert das bei der Reaktion entstehende Wasser ab. Die Veresterung kann in Abwesenheit von Katalysatoren durchgeführt werden. In der Regel setzt man dem Reaktionsgemisch jedoch einen bekannten Veresterungskatalysator, beispielsweise Zinnschliff oder Titansäureester zu, um die Reaktionszeit in wirtschaftlich vertretbaren Grenzen zu halten. Die resultierenden Fettsäureester können zur Reinigung und gegebenenfalls Entfernung des Katalysators, gewünschtenfalls unter Verwendung eines Filtrierhilfsmittels, filtriert werden, vorzugsweise bei erhöhter Temperatur. Eine weitere Raffination vor der vorgesehenen Verwendung ist normalerweise nicht erforderlich.

Die erfindungsgemäßen Fettsäureester von Polyglycerinpolyethylenglykol-polypropylenglycolethern stellen viskose Flüssigkeiten dar, die normalerweise eine mehr oder weniger starke gelbliche Färbung aufweisen. Je nach dem bei der Veresterung angewendeten Fettsäureüberschuß enthalten die Produkte eine gewisse Menge freier Fettsäure, die die schauminhibierende Wirkung der Produkt nicht beeinträchtigt. Die Produkte sind selbst emulgierend und können unmittelbar oder nach vorherigem Dispergieren in Wasser oder Lösen in organischen Lösungsmitteln, beispielsweise niedermolekularen Alkoholen, zum Einsatz gebracht werden. Sie können auch mit Verschnittsubstanzen, Dispergiermitteln oder weiteren schauminhibierend wirkenden Verbindungen vermischt und in dieser Form eingesetzt werden. Beispiele

EP 0 264 826 B1

hierfür sind Polyglykoletherderivate von Alkoholen oder Fettsäuren, Fettsäurester und Paraffine oder Paraffinöle. Sie können auch auf Trägerkörner, die aus einem saugfähigen Material bestehen, aufgebracht werden und in dieser Form, d.h. als schütt- und rieselfähige Adsorbate, zum Einsatz kommen. Geeignete Trägermaterialien sind beispielsweise lockere, insbesondere sprühgetrocknete Salze wie Sulfate, Carbonate, Phosphate, Polyphosphate, Silikate und Borate des Natriums oder Magesiums, feinteiliges Siliciumdioxid (Kieselgur, Aerosil®), Aluminiumoxid, feinteilige Tone, Bentonite und Alumosilikate sowie Gemische derartiger Adsorbtionsmittel.

Die erfindungsgemäßen Fettsäureester sowie ihre Zubereitungen sind hochwirksame Entschäumer und eignen sich für zahlreiche Einsatzgebiete, insbesondere in der Nahrungsmittelindustrie und in der chemischen Verfahrenstechnik. Beispiele hierfür sind die Zuckerindustrie (Entschäumung von Melasse), Gärindustrie (Entschäumung von Hefe- und Enzymlösungen), Stärkeindustrie (Gewinnung von Kartoffelstärke sowie die Herstellung von Phosphorsäure aus mineralischen Phosphaten. Weitere Einsatzgebiete sind industrielle Reiniger und Reinigungsverfahren, insbesondere für die Spritzreinigung und das Reinigen von Flaschen sowie die Verwendung als schaumarme Netzmittel oder als Entschäumer bei Polymerisationsreaktionen.

Der besondere Wert der erfindungsgemäßen Fettsäureester ist darin zu sehen, daß ihre schauminhibierende Wirkung über einen weiten Bereich temperaturunabhängig ist und daß sie ihre Wirkung bei der Anwendung über lange Zeit beibehalten. In zahlreichen technischen Prozessen werden die zum Schäumen neigenden Lösungen über einen längeren Zeitraum einer intensiven mechanischen Bearbeitung und erhöhten Temperaturen ausgesetzt, beispielsweise bei Eindampfungsprozessen mit starker Umwälzung der Lösung. Zwar kennt man eine Reihe von Schaumdämpfungsmitteln, die in solchen Fällen einen spontanen Zerfall des Schaums bewirken. Nach kurzer Zeit läßt die Wirkung des Inhibitors jedoch nach und es baut sich erneut Schaum auf. Andere Produkte zerstören den Schaum verhältnismäßig langsam, bewirken aber eine sehr anhaltende Schaumdepression. Die erfindungsgemäßen Mittel zeichnen sich sowohl durch eine hohe Spontanwirkung als auch durch eine ausdauernde Langzeitwirkung aus. Gegenüber zahlreichen Schauminhibitoren aus Silicon- oder Paraffinbasis haben sie den wesentlichen Vorteil, daß sie das Substrat nicht hydrophobieren.

## Beispiele

I. Herstellung der Fettsäureester von Polyglycerinpolyglykolethern

a) In einem Hubrührautoklaven wurden 292 g Polyglycerin (Hydroxylzahl ca. 1000; entsprechend 5,53 Mol Hydroxygruppen) mit 6 g Kaliumhydroxid in Form einer 30gewichtsprozentigen Lösung in Methanol vermischt. Das mit dem Katalysator eingebrachte Methanol wurden durch Erhitzen auf 100 °C im Vakuum entfernt. Danach wurde das Gemisch auf 150 °C aufgeheizt und Ethylenoxid in den Autoklaven gepumpt, das praktisch sofort mit dem Polyglycerin reagierte, wobei die Temperatur des Gemisches auf etwa 170 °C anstieg. Anschließend wurde laufend Ethylenoxid mit einer solchen Geschwindigkeit zugeführt, daß die Reaktionstemperatur im Bereich von 170 bis 180 °C lag und der Druck im Autoklaven 4,5 bar nicht überschritt. Auf diese Weise wurden insgesamt 1708 g (38,7 Mol) Ethylenoxid mit dem Polyglycerin umgesetzt. Nach dem Abklingen der Reaktion, bemerkbar am Temperatur- und Druckabfall, wurde das Gemisch noch 30 Minuten bei 170 °C weitergerührt und anschließend abgekühlt.

Das erhaltene rötlichbraun gefärbte Ethoxylat hatte die Hydroxylzahl 165 und die Akalizahl 3,7.

b) 551 g des nach a) erhaltenen Anlagerungsproduktes von Ethylenoxid an Polyglycerin (entsprechend 1,53 Mol Hydroxylgruppen) wurden in einem Hubrührautoklaven mit 4,6 g Kaliumhydroxid in Form einer 30gewichtsprozentigen Lösung in Methanol vermischt. Das mit dem Katalysator eingebrachte Methanol wurde durch Erhitzen auf 100 °C im Vakuum entfernt. Danach wurde das Gemisch auf 120° C erhitzt und Propylenoxid in den Autoklaven gepumpt, das praktisch sofort mit dem Polyglycerinpolyethylenglykolether reagierte. Anschließend wurde laufend Propylenoxid mit einer solchen Geschwindigkeit zugeführt, daß die Temperatur des Reaktionsgemisches sich im Bereich von 120 bis 130 °C bewegte und der Druck im Autoklaven 4,5 bar nicht überschritt. Auf diese Weise wurden insgesamt 1949 g (33,6 Mol) Propylenoxid zur Reaktion gebracht. Nach dem Abklingen der Reaktion wurde das Gemisch noch 30 Minuten lang bei 120 °C weitergerührt und anschließend abgekühlt. Zur Inaktivierung des Katalysators wurde das Reaktionsprodukt durch Zugabe von Milchsäure auf pH 7 eingestellt.

Das resultierende braun gefärbte Ethoxylat/Propoxylat hatte die OH-Zahl 48.

c) In einem Dreihalskolben mit Rührer und aufgesetzter Destillationsbrücke wurden 384 g des nach b) erhaltenen Anlagerungsproduktes von Ethylenoxid und Propylenoxid an Polyglycerin (entsprechend 0,33 Mol Hydroxylgruppen), 133 g (0,475 Mol) technische Ölsäure (gesättigt; 1 % $C_{12}$; 3 % $C_{14}$; 0,5

4

% $C_{15}$; 5 % $C_{16}$; 1 % $C_{17}$; 2 % $C_{18}$; einfach ungesättigt: 6 % $C_{16}$; 70 % $C_{18}$; zweifachen ungesättigt: 10 % $C_{18}$; dreifach ungesättigt; 0,5 % $C_{18}$; Angaben in Gewichtsprozent; Säurezahl 199-204; Verseifungszahl 200-205; Jodzahl 88-96) und 1 g Tetra-isopropyl-ortho-titanat in einer Stickstoffatmosphäre unter Rühren auf 240 °C erhitzt und 3 1/2 Stunden lang auf dieser Temperatur gehalten. Dabei wurden 10,5 ml Destillat erhalten, die 5,0 ml Wasser enthielten. Das Reaktionsgemisch wurde auf 70 °C abgekühlt, mit 20 g Bleicherde versetzt und filtriert. Dabei wurden 502 g Fettsäureester eines Polyglycerinpolyethylenglykol/-polypropylenglykolethers (Produkt 1) erhalten, der folgende Kennzahlen hatte:

| Säurezahl | 14 |
|---|---|
| Hydroxylzahl | 12,2 |
| Verseifungszahl | 51,4 |
| Dichte bei 70 °C | 0,9570 |
| Stockpunkt | <-20 °C |

II. Anwendungstechnische Prüfung

Die Schaumprüfung wurde wie folgt durchgeführt:

Eine abgemessene Versuchslösung wird in einen graduierten Standzylinder mit einem Fassungsvermögen von 5 Liter überführt. Mittels einer Kreiselpumpe wird die Lösung am Boden des Standzylinders angesaugt und zu einem Auslaufrohr, das in Höhe der Oberkante des Standzylinders endet, gefördert. Die Lösung gelangt in freiem Fall wieder in den Standzylinder und erzeugt beim Auftreffen auf die Flüssigkeitsoberfläche Schaum. Nach kurzer Zeit stellt sich eine konstante Schaumhöhe und damit ein für die weitere Messung verwertbares Ausgangsschaumvolumen ein.

Der zu prüfende Schauminhibitor wird in einem inerten Lösungsmittel (5gewichtsprozentige Lösung in Dioxan) gelöst und mittels einer Mikropipette auf die Schaumsäule aufgetropft. Das Schaumvolumen wird bei konstant weiter betriebener Umlaufpumpe in gewissen Zeitabständen gemessen. Eine tabellarische Aufstellung dieser Meßwerte ermöglicht eine Aussage über den spontanen Schaumzerfall und die Langzeitwirkung des getesteten Schauminhibitors. Inhibitoren, bei deren Anwendung der Schaum zwar spontan zerfällt, sich innerhalb kurzer Zeit jedoch wieder weitgehend aufbaut, können auf diese Weise als unbrauchbar bzw. wenig geeignet identifiziert werden. Das gleiche gilt für Mittel mit guter Langzeitwirkung, deren spontane Schaumzerstörung jedoch nur wenig ausgeprägt ist.

Neben dem erfindungsgemäßen Produkt 1 wurden zum Vergleich folgende Verbindungen getestet, die bereits für ähnliche Zwecke verwendet bzw. als geeignet beschrieben wurden (Abkürzungen: EO = angelagertes Ethylenoxid, PO = angelagertes Propylenoxid).

A) Polyglycerin + 22 PO

B) Polypropylenglykol (MG = 2020)

C) Talgalkohol + 2 EO + 4 PO

D) Ölsäure + 3 EO

E) Destillationsrückstand aus der Oxoalkoholsynthese (Hydroxylzahl ca. 150) + 15 Gew.- EO + 41 Gew.-% PO

F) Ölsäure + 1 PO

G) Polyglycerin (Hydroxylzahl ca. 1000) + 7 EO + 22 EO

Als Testlösungen wurden verwendet:

a) 100 g durch Feinstmahlung aus rohen Kartoffeln hergestellter Kartoffelschleim, dispergiert in 400 ml Wasser,

b) 100 ml Melasse in 400 ml Wasser

Es wurden jeweils 0,05 ml einer Lösung von 5 g Entschäumer in 95 g Dioxan eingesetzt, was einer Menge von 5 mg Entschäumer auf 1 Liter Substratlösung entspricht. Die Temperatur der Testlösungen betrug 25 °C.

III. Ergebnisse der anwendungstechnischen Prüfung

1) Lösung a, Anfangsschaumvolumen 2000 ml

| Inhibitor | Schaumvolumen nach Minuten | | | | | |
|---|---|---|---|---|---|---|
| | 0,5 | 1 | 2 | 5 | 10 | 20 |
| 1 | 700 | 600 | 600 | 600 | 620 | 740 |
| E | 1120 | 960 | 800 | 720 | 740 | 960 |
| G | 2000 | 2000 | 2000 | abgebrochen | | |

Der erfindungsgemäße Fettsäureester ist in allen Bereichen den Vergleichsprodukten überlegen.

2) Lösung b, Anfangsschaumwert 2 000 ml

| Inhibitor | Schaumvolumen nach Minuten | | | | | | |
|---|---|---|---|---|---|---|---|
| | 0,5 | 1 | 2 | 5 | 10 | 20 | 30 |
| 1 | 500 | 540 | 580 | 640 | 720 | 800 | 840 |
| A | 700 | 680 | 680 | 780 | 880 | 1200 | 1480 |
| B | 780 | 800 | 880 | 1000 | 1100 | 1200 | 1600 |
| C | 600 | 600 | 680 | 820 | 940 | 1040 | 1180 |
| D | 1500 | 1220 | 1100 | 1120 | 1120 | 1120 | 1180 |
| E | 1100 | 820 | 760 | 800 | 820 | 920 | 980 |
| F | 960 | 800 | 760 | 800 | 820 | 920 | 980 |

Eine Reihe der Vergleichssubstanzen, nämlich A, B, und C wirken zwar spontan, erreichen aber nur eine ungenügende Langzeitwirkung. Die Vergleichsproben D, E und F sind zwar nach längerer Zeit noch wirksam, jedoch ist die spontane Schaumzerstörung zu schwach ausgeprägt. Das erfindungsgemäße Mittel zeigt ein ausgeglichenes Verhalten hinsichtlich spontaner und dauerhafter Wirkung.

**Patentansprüche**

1. Fettsäureester von Polyglycerinpolyglykolethern, dadurch erhältlich, daß man Polyglycerine mit Ethylenoxid und Propylenoxid umsetzt und das erhaltene Alkylenoxidanlagerungsprodukt mit Fettsäuren verestert, wobei man 2 bis 15 Mol Ethylenoxid, 10 bis 60 Mol Propylenoxid und 1 bis 3 Mol Fettsäure pro Mol im Polyglycerin vorhandener Hydroxylgruppen einsetzt.

2. Fettsäureester nach Anspruch 1, dadurch gekennzeichnet, daß man das Polyglycerin zuerst mit Etylenoxid und anschließend mit Propylenoxid umsetzt.

3. Fettsäureester nach Anspruch 1, dadurch gekennzeichnet, daß man das Polyglycerin gleichzeitig mit Ethylenoxid und Propylenoxid umsetzt.

4. Fettsäureester nach den Ansprüchen 1 bis 3, dadurch gekennzeichnet, daß man das Alkylenoxidanlagerungsprodukt mit gesättigten und/oder ungesättigten Fettsäuren verestert, die 8 bis 22 Kohlenstoffatome aufweisen.

5. Fettsäureester nach Anspruch 4, dadurch gekennzeichnet, daß man das Alkylenoxidanlagerunsprodukt mit Fettsäuren verestert, die 16 bis 18 Kohlenstoffatome aufweisen.

6. Fettsäureester nach den Ansprüchen 1 bis 5, dadurch gekennzeichnet, daß man das Polyglycerin mit 5 bis 10 Mol Ethylenoxid und 15 bis 35 Mol Propylenoxid pro Mol im Polyglycerin vorhandener Hydroxylgruppen umsetzt.

7. Fettsäureester nach den Ansprüchen 1 bis 6, dadurch gekennzeichnet, daß bei der Umsetzung des Polyglycerins mit den Alkylenoxiden das Molverhältnis von Ethylenoxid zu Propylenoxid im Bereich von 1 : 2 bis 1 : 3,5 liegt.

8. Fettsäureester nach den Ansprüchen 1 bis 7, dadurch gekennzeichnet, daß man das Alkylenoxidanlagerungsprodukt mit 1 bis 2 Mol Fettsäure pro Mol im Polyglycerin vorhandener Hydroxylgruppen umsetzt.

9. Verfahren zur Herstellung von Fettsäureestern von Polyglycerinpolyglykolethern, dadurch gekennzeichnet, daß man Polyglycerine in Gegenwart eines sauren oder alkalischen Alkoxylierungskatalysators mit Ethylenoxid und Propylenoxid umsetzt und das erhaltene Alkylenoxidanlagerungsprodukt, gegebenenfalls in Gegenwart eines Veresterungskatalysators, mit Fettsäuren verestert, wobei man 2 bis 15 Mol Ethylenoxid, 10 bis 60 Mol Propylenoxid und 1 bis 3 Mol Fettsäure pro Mol im Polyglycerin vorhandener Hydroxylgruppen einsetzt.

10. Verfahren nach Anspruch 9, dadurch gekennzeichnet, daß man das Polyglycerin zuerst mit Ethylenoxid und anschließend mit Propylenoxid umsetzt.

11. Verfahren nach Anspruch 9, dadurch gekennzeichnet, daß man das Polyglycerin gleichzeitig mit Ethylenoxid und Propylenoxid umsetzt.

12. Verfahren nach den Ansprüchen 9 bis 11, dadurch gekennzeichnet, daß man das Alkylenoxidanlagerungsprodukt mit gesättigten und/oder ungesättigten Fettsäuren verestert, die 8 bis 22 Kohlenstoffatome aufweisen.

13. Verfahren nach Anspruch 12, dadurch gekennzeichnet, daß man das Alkylenoxidanlagerungsprodukt mit Fettsäuren verestert, die 16 bis 18 Kohlenstoffatome aufweisen.

14. Verfahren nach den Ansprüche 9 bis 13, dadurch gekennzeichnet, daß man das Polyglycerin mit 5 bis 10 Mol Ethylenoxid und 15 bis 35 Mol Propylenoxid pro Mol im Polyglycerin vorhandener Hydroxylgruppen umsetzt.

15. Verfahren nach den Ansprüchen 9 bis 14, dadurch gekennzeichnet, daß bei der Umsetzung des Polyglycerins mit den Alkylenoxiden das Molverhältnis von Ethylenoxid zu Propylenoxid im Bereich von 1 : 2 bis 1 : 3,5 liegt.

16. Verfahren nach den Ansprüchen 9 bis 15, dadurch gekennzeichnet, daß man das Alkylenoxidanlagerungsprodukt mit 1,1 bis 2 Mol Fettsäure pro Mol im Polyglycerin vorhandener Hydroxylgruppen umsetzt.

17. Verwendung von Fettsäureestern von Polyglycerinpolyglykolethern, die dadurch erhältlich sind, daß man gemäß den Ansprüchen 9 bis 16 technisches Polyglycerin mit Ethylenoxid und Propylenoxid umsetzt und das erhaltene Alkylenoxidanlagerungsprodukt mit Fettsäuren verestert, wobei man 2 bis 15 Mol Ethylenoxid, 10 bis 60 Mol Propylenoxid und 1 bis 3 Mol Fettsäure pro Mol im Polyglycerin vorhandener Hydroxylgruppen einsetzt, als Entschäumer in wässrigen Zusammensetzungen.

**Claims**

1. Fatty acid esters of polyglycerol polyglycol ethers obtainable by reaction of polyglycerols with ethylene oxide and propylene oxide and esterification of the alkylene oxide adduct obtained with fatty acids using from 2 to 15 mol ethylene oxide, from 10 to 60 mol propylene oxide and from 1 to 3 mol fatty acid per mol hydroxyl groups in the polyglycerol.

2. Fatty acid esters as claimed in claim 1, characterized in that the polyglycerol is reacted first with ethylene oxide and then with propylene oxide.

3. Fatty acid esters as claimed in claim 1, characterized in that the polyglycerol is reacted simultaneously with ethylene oxide and propylene oxide.

4. Fatty acid esters as claimed in claims 1 to 3, characterized in that the alkylene oxide adduct is esterified with saturated and/or unsaturated fatty acids containing from 8 to 22 carbon atoms.

5. Fatty acid esters as claimed in claim 4, characterized in that the alkylene oxide adduct is esterified with fatty acids containing from 16 to 18 carbon atoms.

6. Fatty acid esters as claimed in claims 1 to 5, characterized in that the polyglycerol is reacted with from 5 to 10 mol ethylene oxide and from 15 to 35 mol propylene oxide per mol hydroxyl groups in the polyglycerol.

7. Fatty acid esters as claimed in claims 1 to 6, characterized in that the molar ratio of ethylene oxide to propylene oxide in the reaction of the polyglycerol with the alkylene oxides is from 1:2 to 1:3.5.

8. Fatty acid esters as claimed in claims 1 to 7, characterized in that the alkylene oxide adduct is reacted with from 1 to 2 mol fatty acid per mol hydroxyl groups in the polyglycerol.

9. A process for the production of fatty acid esters of polyglycerol polyglycol ethers, characterized in that polyglycerols are reacted with ethylene oxide and propylene oxide in the presence of an acidic or alkaline alkoxylation catalyst and the alkylene oxide adduct obtained is esterified with fatty acids, optionally in the presence of an esterification catalyst, from 2 to 15 mol ethylene oxide, from 10 to 60 mol propylene oxide and from 1 to 3 mol fatty acid being used per mol hydroxyl groups in the polyglycerol.

10. A process as claimed in claim 9, characterized in that the polyglycerol is reacted first with ethylene oxide and then propylene oxide.

11. A process as claimed in claim 9, characterized in that the polyglycerol is reacted simultaneously with ethylene oxide and propylene oxide.

12. A process as claimed in claims 9 to 11, characterized in that the alkylene oxide adduct is esterified with saturated and/or unsaturated fatty acids containing from 8 to 22 carbon atoms.

13. A process as claimed in claim 12, characterized in that the alkylene oxide adduct is esterified with fatty acids containing from 16 to 18 carbon atoms.

14. A process as claimed in claims 9 to 13, characterized in that the polyglycerol is reacted with from 5 to 10 mol ethylene oxide and from 15 to 35 mol propylene oxide per mol hydroxyl groups in the polyglycerol.

15. A process as claimed in claims 9 to 14, characterized in that in that the molar ratio of ethylene oxide to propylene oxide in the reaction of the polyglycerol with the alkylene oxides is from 1:2 to 1:3.5.

16. A process as claimed in claims 9 to 15, characterized in that the alkylene oxide adduct is reacted with from 1.1 to 2 mol fatty acid per mol hydroxyl groups in the polyglycerol.

EP 0 264 826 B1

17. The use of fatty acid esters of polyglycerol polyglycol ethers obtainable in accordance with claims 9 to 16 by reaction of technical polyglycerol with ethylene oxide and propylene oxide and esterification of the alkylene oxide adduct obtained with fatty acids, from 2 to 15 mol ethylene oxide, from 10 to 60 mol propylene oxide and from 1 to 3 mol fatty acid being used per mol hydroxyl groups in the polyglycerol, as foam inhibitors in aqueous compositions.

**Revendications**

1. Esters d'acide gras d'éthers de polyglycérine et de polyglycols que l'on peut obtenir en faisant réagir de la polyglycérine avec de l'oxyde d'éthylène et de l'oxyde de propylène et en estérifiant le produit d'addition d'oxyde d'alcoylène obtenu, avec des acides gras, procédé dans lequel on met en oeuvre de 2 à 15 mol d'oxyde d'éthylène, de 10 à 60 mol d'oxyde de propylène et de 1 à 3 mol d'acide gras par mol de groupes hydroxyle présents dans la polyglycérine.

2. Esters d'acide gras selon la revendication 1, caractérisés en ce que l'on fait réagir la polyglycérine d'abord avec l'oxyde d'éthylène et ensuite avec l'oxyde de propylène.

3. Esters d'acide gras selon la revendication 1, caractérisés en ce que l'on fait réagir la polyglycérine simultanément avec l'oxyde d'éthylène et l'oxyde de propylène.

4. Esters d'acide gras selon les revendications 1 à 3, caractérisés en ce que l'on estérifie le produit d'addition d'oxyde d'alcoylène avec des acides gras saturés et/ou non saturés qui possèdent de 8 à 22 atomes de carbone.

5. Esters d'acide gras selon la revendication 4, caractérisés en ce que l'on estérifie le produit d'addition d'oxyde d'alcoylène avec des acides gras qui possèdent de 16 à 18 atomes de carbone.

6. Esters d'acide gras selon les revendications 1 à 6, caractérisés en ce que l'on fait réagir la polyglycérine avec de 5 à 10 mol d'oxyde d'éthylène et de 15 à 35 mol d'oxyde de propylène par mol de groupes hydroxyle présents dans la polyglycérine.

7. Esters d'acide gras selon les revendications 1 à 6, caractérisés en ce que lors de la réaction de la polyglycérine avec les oxydes d'alcoylène, le rapport molaire de l'oxyde d'éthylène à l'oxyde de propylène se situe dans la zone allant de 1 : 2 à 1 : 3,5.

8. Esters d'acide gras selon les revendications 1 à 7, caractérisés en ce que l'on fait réagir le produit d'addition d'oxyde d'alcoylène avec 1 à 2 mol d'acide gras par mol de groupes hydroxyle présents dans la polyglycérine.

9. Procédé d'obtention d'esters d'acide gras d'éthers de polyglycérine et de polyglycol, caractérisé en ce que l'on fait réagir la polyglycérine en présence d'un catalyseur d'alcoxylation acide ou alcalin, avec l'oxyde d'éthylène et l'oxyde de propylène et en ce que l'on estérifie le produit d'addition d'oxyde d'alcoylène obtenu le cas échéant en présence d'un catalyseur d'estérification, avec des acides gras, procédé pour lequel on met en oeuvre de 2 à 15 mol d'oxyde d'éthylène, de 10 à 60 mol d'oxyde de propylène et de 1 à 3 mol d'acide gras par mol de groupes hydroxyle présents dans la polyglycérine.

10. Procédé selon la revendication 9, caractérisé en ce que l'on fait réagir la polyglycérine en premier lieu avec l'oxyde d'éthylène et ensuite avec l'oxyde de propylène.

11. Procédé selon la revendication 9, caractérisé en ce que l'on fait réagir la polyglycérine simultanément avec l'oxyde d'éthylène et l'oxyde de propylène.

12. Procédé selon les revendications 9 à 11, caractérisé en ce que l'on estérifie le produit d'addition d'oxyde d'alcoylène avec des acides gras saturés et/ou non saturés, qui possèdent de 8 à 22 atomes de carbone.

13. Procédé selon la revendication 12, caractérisé en ce que l'on estérifie le produit d'addition d'oxyde d'alcoylène avec des acides gras qui possèdent de 16 à 18 atomes de carbone.

9

**14.** Procédé selon les revendications 9 à 13, caractérisé en ce que l'on fait réagir la polyglycérine avec de 5 à 10 mol d'oxyde d'éthylène et de 15 à 35 mol d'oxyde de propylène par mol de groupes hydroxyles présents dans la polyglycérine.

**15.** Procédé selon les revendications 9 à 14, caractérisé en ce que lors de la réaction de la polyglycérine avec les oxydes d'alcoylène, le rapport molaire de l'oxyde d'éthylène à l'oxyde de propylène se situe dans la zone de 1 : 2 à 1 : 3,5.

**16.** Procédé selon les revendications 9 à 15, caractérisé en ce que l'on fait réagir le produit d'addition d'oxyde d'alcoylène avec de 1,1 à 2 mol d'acide gras par mole de groupes hydroxyle présents dans la polyglycérine.

**17.** Utilisation en tant qu'agent anti-mousse dans des compositions aqueuses d'esters d'acide gras d'éthers de polyglycérine et de polyglycol, que l'on peut obtenir en faisant réagir selon les revendications 9 à 16, de la polyglycérine avec de l'oxyde d'éthylène et de l'oxyde de propylène et en estérifiant le produit d'addition d'oxyde d'alcoylène obtenu avec des acides gras, opérations dans lesquelles on met en oeuvre de 2 à 15 mol d'oxyde d'éthylène, de 10 à 60 mol d'oxyde de propylène et de 1 à 3 mol d'acide gras par mol de groupes hydroxyle présents dans la polyglycérine.